# EUROPÄISCHE PATENTANMELDUNG

(11) **EP 3 489 531 A1**
(43) Veröffentlichungstag der Anmeldung: **29.05.2019**
(21) Anmeldenummer: 18207787.5
(22) Anmeldetag: 22.11.2018
(51) Int. Cl.: F16B 5/06, F16B 21/08, F16B 37/04, B60R 13/04

(54) **SYSTEM ZUM VERBINDEN EINES ERSTEN BAUTEILS MIT EINEM ZWEITEN BAUTEIL**

(30) Priorität: 24.11.2017 DE 202017107162 U
(71) Anmelder: REHAU AG + Co, 95111 Rehau (DE)
(72) Erfinder: Sperrer, Carsten, 95689 Fuchsmühl (DE); Petrik, Vaclav, 76005 Zlin (CZ); Kryspin, Radek, 14900 Praha 4 - Seberov (CZ); Horak, Petr, 14700 Praha 4 (CZ)

(57) **Zusammenfassung**

Die Erfindung betrifft System zum Verbinden eines ersten Bauteils (1) mit einem zweiten Bauteil (2), umfassend ein aus Kunststoffmaterial gebildetes erstes Bauteil (1), und ein Verbindungselement (3) zur Verbindung des ersten Bauteils (1) mit dem zweiten Bauteil, wobei bei einer unterschiedlichen Wärmeausdehnung des ersten Bauteils (1) in Relation zu dem zweiten Bauteil (2) eine Sockelplatte (3a) des Verbindungselements (3) verschiebbar bleibt, indem ein Rastfinger (10) mittels eines Rastvorsprungs (12) erneut durch das Verbindungselement (3) auslenkbar ist.

## Beschreibung

Die vorliegende Erfindung betrifft ein System zum Verbinden eines ersten Bauteils mit einem zweiten Bauteil, umfassend ein aus Kunststoffmaterial gebildetes erstes Bauteil, und ein Verbindungselement zur Verbindung des ersten Bauteils mit dem zweiten Bauteil, wobei das Verbindungselement ein Sockelplatte und einen von der Sockelplatte abstehenden und mit der Sockelplatte verbundenen Schaft aufweist, wobei das erste Bauteil einen flächigen Verbindungsabschnitt mit einer Dicke D aufweist und der Schaft des Verbindungselementes, im mit dem ersten Bauteil verbundenen Zustand des Verbindungselementes, in einem Langloch des Verbindungsabschnittes aufgenommen ist, wobei das Langloch an einer ersten Seite eine seitliche Einführöffnung für den Schaft aufweist.

Ein derartiges System ist im Stand der Technik beispielsweise aus dem Dokument DE 601 27 893 T2 vorbekannt.

Problematisch an Systemen des Stands der Technik ist, dass bei der Herstellung eines aus Kunststoffmaterial gebildeten ersten Bauteils Schwankungen hinsichtlich der Bauteiltoleranzen unvermeidlich sind. Zudem weisen Kunststoffmaterialien einen hohen thermischen Ausdehnungskoeffizient auf, sodass ein mit dem ersten Bauteil verbundenes Verbindungselement aufgrund der thermischen Ausdehnung des ersten Bauteils und oder des zweiten Bauteils sich von dem ersten Bauteil löst und nicht in seine ursprünglich vorgesehene Position zurückkehrt.

Aufgabe der vorliegenden Erfindung ist es daher ein gattungsgemäßes System anzugeben, dass einem lösen der Verbindung zwischen dem ersten Bauteil und dem Verbindungselement zu dem zweiten Bauteil aufgrund von thermischer Ausdehnung vermeidet.

Diese Aufgabe wird erfindungsgemäß gelöst durch ein System zum Verbinden eines ersten Bauteils mit einem zweiten Bauteil, umfassend:
- ein aus Kunststoffmaterial gebildetes erstes Bauteil, und
- ein Verbindungselement zur Verbindung des ersten Bauteils mit dem zweiten Bauteil,
wobei das Verbindungselement eine Sockelplatte und einen von der Sockelplatte abstehenden und mit der Sockelplatte verbundenen Schaft aufweist, wobei das erste Bauteil einen flächigen Verbindungsabschnitt mit einer Dicke D aufweist und der Schaft des Verbindungselementes, im mit dem ersten Bauteil verbundenen Zustand des Verbindungselementes, in einem Langloch des Verbindungsabschnitts aufgenommen ist, wobei das Langloch an einer ersten Seite eine seitliche Einführöffnung für den Schaft aufweist. Erfindungsgemäß ist an dem ersten Bauteil ein Rastelement einstückig angeformt, wobei das Rastelement einen Rastfinger aufweist der gegenüberliegend zu der Einführöffnung beginnt und dessen Endbereich in Richtung des Langlochendes orientiert ist, wobei der Rastfinger von dem Verbindungsabschnitt beabstandet ist und, wobei im Bereich oberhalb der Einführöffnung von dem Endbereich des Rastfingers ein Rastvorsprung absteht, der in Richtung auf die Einführöffnung zu weist, wobei an den Rastvorsprung eine in Relation zu dem Rastvorsprung zurückgesetzte Fixierlippe anschließt und in dem verbundenen Zustand die Sockelplatte des Verbindungselements zwischen dem flächigen Verbindungsabschnitt, der Fixierlippe des Rastfingers und dem Rastvorsprung zumindest formschlüssig gehalten ist, sodass bei einer unterschiedlichen Wärmeausdehnung des ersten Bauteils in Relation zu dem zweiten Bauteil die Sockelplatte verschiebbar bleibt, indem der Rastfinger mittels des Rastvorsprungs erneut durch das Verbindungselement auslenkbar ist.

Die erfindungsgemäße Ausgestaltung des Systems ermöglicht es dem Verbindungselement bei auftretenden Wärmeausdehnungen, und hiermit verbundenen Spannungen, diesen Dehnungen bzw. Spannungen auszuweichen, und bei Wegfall der Wärmeausdehnung in den Verbauzustand zurückzukehren. Der Rastfinger des Systems mit seiner Fixierlippe dient hierbei im Verbauzustand der Sicherung der gewünschten Verbauposition des Verbindungselementes in Relation zu dem ersten Bauteil. Gleichzeitig kann der auslenkbaren Rastfinger bei einer wärmebedingten Verlagerung des Verbindungselementes ausweichen, um der Wärmeausdehnung bzw. den Wärmespannungen zu folgen.

Die Sockelplatte liegt im verbundenen Zustand bevorzugt mit einer Seite auf dem Verbindungsabschnitt auf, und mit einem Teil der gegenüberliegenden Seite an der Fixierlippe an. Die kurze Seite des Langlochs ist hierbei schmaler dimensioniert als die Sockelplatte in der entsprechenden Raumrichtung, sodass die Sockelplatte nicht durch das Langloch fallen kann.

Vorteilhaft kann der Schaft des Verbindungselementes zusätzlich an einem Anschlag auf wenigstens einer der Seitenränder des Langlochs anliegen. Ein entsprechender Anschlag lässt sich in der Abstimmungsphase (zum Beispiel zwischen verschiedenen Prototypen) relativ einfach in der Position verschieben, um die optimale spätere Verbauposition des Verbindungselementes zu ermitteln. Selbiger Anschlag kann punktförmig oder linienförmig ausgebildet sein.

Die Dicke der Sockelplatte kann dem Abstand zwischen der Fixierlippe und dem flächigen Verbindungsabschnitt entsprechen. Selbstredend ist hier auch ein größerer Abstand als die Dicke der Sockelplatte möglich.

Der Rastvorsprung kann eine Aufgleitrampe für die Sockelplatte aufweisen, die derart ausgebildet ist, dass beim Einführen des Schafts des Verbindungselements in das Langloch die Sockelplatte den Rastfinger von dem Verbindungsabschnitt weg auslenkt, sodass die Sockelplatte in den Raum zwischen der Fixierlippe und dem Verbindungsabschnitt gleiten kann.

Bevorzugt kann das erste Bauteil eine Verstärkungsstruktur für das zweite Bauteil ausbilden oder umfassen. Das erste Bauteil kann ein Heckspoiler, eine Stoßfängerverkleidung, eine Kotflügelverkleidung, eine Seitenschutzleiste, eine Türverkleidung oder eine Klappenverkleidung sein, oder kann Teil eines Heckspoilers, einer Stoßfängerverkleidung, einer Kotflügelverkleidung, einer Seitenschutzleiste, einer Türverkleidung oder einer Klappenverkleidung sein.

Das Verbindungselement kann ferner eine mit dem Schaft verbundene Klemmplatte aufweisen, wobei die Klemmplatte von der Sockelplatte in einem Abstand angeordnet ist, der größer oder gleich der Dicke D des Verbindungsabschnitts ist und, wobei im verbundenen Zustand die Sockelplatte und die Klemmplatte den Verbindungsabschnitt bereichsweise zwischen sich einfassen. Auf der Klemmplatte kann ein Dichtelement vorgesehen sein, das in Richtung des zweiten Bauteils orientiert ist und zu diesem hin abdichtet.

Das erste Bauteil kann in einem Spritzgussverfahren oder in einem generativen Verfahren (beispielsweise im 3D Druck) hergestellt sein.

Bevorzugt weist die Sockelplatte eine rechteckige Geometrie auf. Weiter bevorzugt eine viereckige oder eine quadratische oder eine runde oder eine ovale Geometrie auf.

Das System kann ferner ein zweites Bauteil umfassen, wobei das zweite Bauteil ein Karosserieteil eines Kraftfahrzeuges oder ein Verkleidungsteil eines Kraftfahrzeuges ist.

Das Kunststoffmaterial des ersten Bauteils kann Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC), Acrylnitril-Styrol-Acrylat-Copolymere (ASA) oder Mischungen der vorgenannten Materialen umfassen. Wobei bevorzugt ein Acrylnitril-Styrol-Acrylat-Copolymere (ASA) Verwendung findet. Sämtliche vorgenannten Kunststoffmaterialien oder Mischungen von Kunststoffmaterialien können zudem Verstärkungsfasern oder Verstärkungspartikel aufweisen.

Die Erfindung wird anhand eines Ausführungsbeispiels näher erläutert.

Es zeigen:
- Fig. 1 und 2:: Ansichten des Systems in unterschiedlichen Montagezuständen des Verbindungselementes mit dem ersten Bauteil;
- Fig. 3:: Querschnittsdarstellungen des Systems gemäß den Fig. 1 oder 2 in unterschiedlichen Montagezuständen des Verbindungselementes mit dem ersten Bauteil und ein zweites Bauteil.

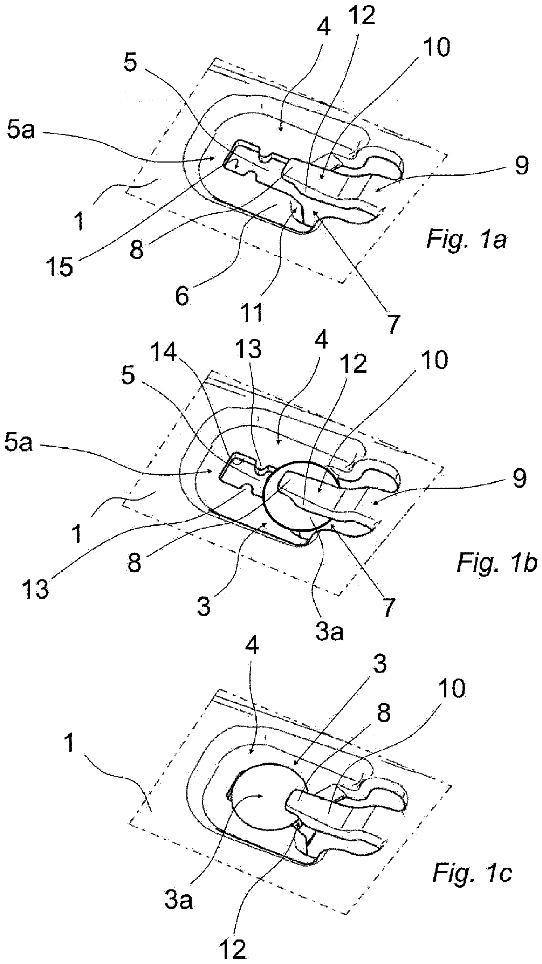

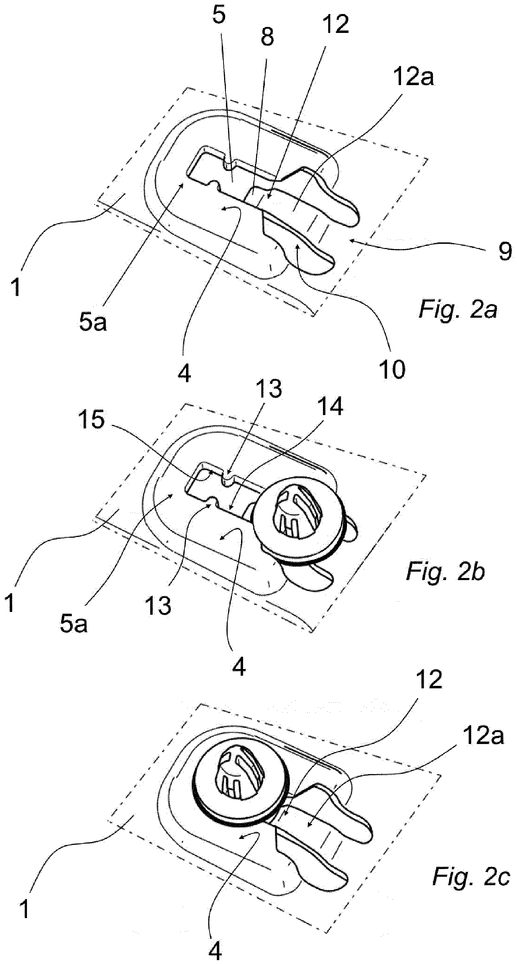

In den Fig. 1 und 2 sind jeweils verschiedene Ansichten des gleichen Systems zum Verbinden eines ersten Bauteils mit einem zweiten Bauteil dargestellt. Die Fig. 2 zeigt die der Fig. 1 gegenüberliegende Seite des Systems.

In sämtlichen Figuren stellt die Abfolge a bis c die folgenden Montagezustände dar:

Verbindungselement nicht montiert - Verbindungselement während der Montage - Verbindungselement in Verbauposition bzw. Verbindungszustand zwischen dem ersten Bauteil und dem Verbindungselement

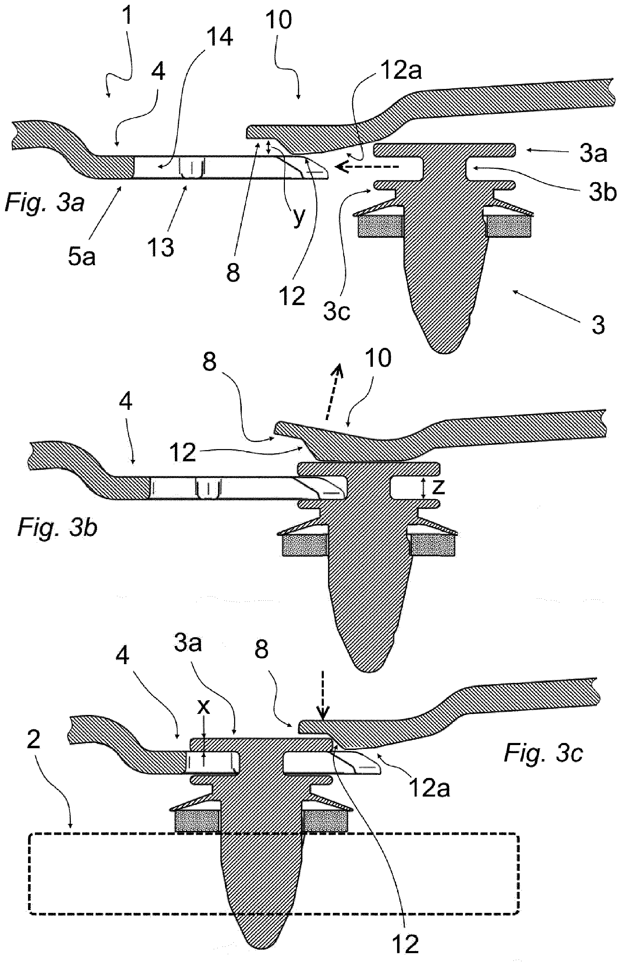

Die Fig. 1 zeigt von einer ersten Seite verschiedene Montagezustände des Systems zum Verbinden eines ersten Bauteils 1 mit einem zweiten Bauteil 2, umfassend:
- ein aus Kunststoffmaterial gebildetes erstes Bauteil 1, und
- ein Verbindungselement 3 zur Verbindung des ersten Bauteils 1 mit dem zweiten Bauteil 2,
wobei das Verbindungselement 3 eine Sockelplatte 3a und einen von der Sockelplatte 3a abstehenden und mit der Sockelplatte 3a verbundenen Schaft 3b (vgl. Querschnittsdarstellungen aus Fig. 3) aufweist.

Das erste Bauteil 1 weist einen flächigen Verbindungsabschnitt 4 mit einer Dicke D auf und der Schaft 3b des Verbindungselementes 3 ist, im mit dem ersten Bauteil 1 verbundenen Zustand des Verbindungselementes 3, in einem Langloch 5 des Verbindungsabschnitts 4 aufgenommen, wobei das Langloch 5 an einer ersten Seite 6 eine seitliche Einführöffnung 7 für den Schaft 3b aufweist.

An dem ersten Bauteil 1 ist ein Rastelement 9 einstückig angeformt, wobei das Rastelement 9 einen Rastfinger 10 aufweist der gegenüberliegend zu der Einführöffnung 7 beginnt und dessen Endbereich 11 in Richtung des Langlochendes 5a orientiert ist, wobei im Bereich einer der ersten Seite 6 gegenüberliegenden zweiten Seite 8 des Langlochs 5 ein Rastelement 9 mit einem auslenkbaren Rastfinger 10 auf dem Verbindungsabschnitt 4 ausgebildet ist, wobei der Rastfinger 10 von dem Verbindungsabschnitt 4 beabstandet ist und sich entlang des Langlochs 5 in Richtung der Einführöffnung 7 erstreckt.

Im Bereich oberhalb der Einführöffnung 7 steht von dem Endbereich 11 des Rastfingers 10 ein Rastvorsprung 12 ab, der in Richtung auf die Einführöffnung 7 zu weist, wobei an den Rastvorsprung 12 eine in Relation zu dem Rastvorsprung 12 zurückgesetzte Fixierlippe 8 anschließt und in dem verbundenen Zustand die Sockelplatte 3a des Verbindungselements 3 zwischen dem flächigen Verbindungsabschnitt 4, der Fixierlippe 8 des Rastfingers 10 und dem Rastvorsprung 12 zumindest formschlüssig gehalten ist, sodass bei einer unterschiedlichen Wärmeausdehnung des ersten Bauteils 1 in Relation zu dem zweiten Bauteil 2 die Sockelplatte 3a verschiebbar bleibt, indem der Rastfinger 10 mittels des Rastvorsprungs 12 erneut durch das Verbindungselement 3 auslenkbar ist.

Die Sockelplatte 3a liegt im verbundenen Zustand mit einer Seite auf dem Verbindungsabschnitt 4 auf, und mit einem Teil der gegenüberliegenden Seite an der Fixierlippe 8 des Rastfingers 10 an.

Der Schaft 3b liegt zusätzlich an einem Anschlag 13 auf wenigstens einer der Seitenränder 14, 15 des Langlochs 5 an. Die Dicke x der Sockelplatte 3a entspricht dem Abstand y zwischen der Fixierlippe 8 und dem flächigen Verbindungsabschnitt 4 (vgl. auch Fig. 3). Der Rastvorsprung 12 weist eine Aufgleitrampe 12a für die Sockelplatte 3a auf, die derart ausgebildet ist, das beim Einführen des Schafts des 3b des Verbindungselements 3 in das Langloch 5 die Sockelplatte 3a den Rastfinger 10 von dem Verbindungsabschnitt 4 weg auslenkt, sodass die Sockelplatte 3a in den Raum zwischen der Fixierlippe 8 und dem Verbindungsabschnitt 4 gleiten kann (vgl. auch Fig. 3).

Das erste Bauteil 1 umfasst oder bildet eine Verstärkungsstruktur für das zweite Bauteil 2 aus.

Das Verbindungselement 3 weist ferner eine mit dem Schaft 3b verbundene Klemmplatte 3c auf, wobei die Klemmplatte 3c von der Sockelplatte 3a in einem Abstand z angeordnet ist, der größer oder gleich der Dicke D des Verbindungsabschnitts 4 ist und, wobei im verbundenen Zustand die Sockelplatte 3a und die Klemmplatte 3c den Verbindungsabschnitt 4 bereichsweise zwischen sich einfassen (vgl. auch Fig. 3).

Das erste Bauteil 1 ist in einem Spritzgussverfahren oder in einem generativen Verfahren (zum Beispiel in einem 3-D Druckverfahren) hergestellt.

Die Sockelplatte 3a weist eine runde Geometrie, im konkreten Fall eine kreisförmmige Geometrie auf.

Die Fig. 2 zeigt von einer der ersten Seite gegenüberliegenden Seite die verschiedene Montagezustände des Systems zum Verbinden eines ersten Bauteils 1 mit einem zweiten Bauteil 2. Die Ausführungen zu Fig. 1 gelten entsprechend.

In Fig. 3 umfasst das wie vorstehend beschriebene System ein zweites Bauteil 2 (schematisch dargestellt), wobei das zweite Bauteil 2 ein Karosserieteil eines Kraftfahrzeuges oder ein Verkleidungsteil eines Kraftfahrzeuges ist. Selbiges zweites Bauteil 2 ist über eine das Verbindungselement 3 und hierüber mit dem ersten Bauteil 1 verbunden.

Bevorzugt kann das erste Bauteil 1 eine Verstärkungsstruktur für das zweite Bauteil 2 ausbilden oder umfassen.

Das erste Bauteil 1 kann ein Heckspoiler, eine Stoßfängerverkleidung, eine Kotflügelverkleidung, eine Seitenschutzleiste, eine Türverkleidung oder eine Klappenverkleidung sein, oder kann Teil eines Heckspoilers, einer Stoßfängerverkleidung, einer Kotflügelverkleidung, einer Seitenschutzleiste, einer Türverkleidung oder einer Klappenverkleidung sein.

## Patentansprüche

1. System zum Verbinden eines ersten Bauteils (1) mit einem zweiten Bauteil (2), umfassend:
- ein aus Kunststoffmaterial gebildetes erstes Bauteil (1), und
- ein Verbindungselement (3) zur Verbindung des ersten Bauteils (1) mit dem zweiten Bauteil (2),
wobei das Verbindungselement (3) eine Sockelplatte (3a) und einen von der Sockelplatte (3a) abstehenden und mit der Sockelplatte (3a) verbundenen Schaft (3b) aufweist,
wobei das erste Bauteil (1) einen flächigen Verbindungsabschnitt (4) mit einer Dicke D aufweist und der Schaft (3b) des Verbindungselementes (3), im mit dem ersten Bauteil (1) verbundenen Zustand des Verbindungselementes (3), in einem Langloch (5) des Verbindungsabschnitts (4) aufgenommen ist, wobei das Langloch (5) an einer ersten Seite (6) eine seitliche Einführöffnung (7) für den Schaft (3b) aufweist,
**dadurch gekennzeichnet, dass**
an dem ersten Bauteil (1) ein Rastelement (9) einstückig angeformt ist, wobei das Rastelement (9) einen Rastfinger (10) aufweist der gegenüberliegend zu der Einführöffnung (7) beginnt und dessen Endbereich (11) in Richtung des Langlochendes (5a) orientiert ist
wobei der Rastfinger (10) von dem Verbindungsabschnitt (4) beabstandet ist und,
wobei im Bereich oberhalb der Einführöffnung (7) von dem Endbereich (11) des Rastfingers (10) ein Rastvorsprung (12) absteht, der in Richtung auf die Einführöffnung (7) zu weist,
wobei an den Rastvorsprung (12) eine in Relation zu dem Rastvorsprung (12) zurückgesetzte Fixierlippe (8) anschließt und in dem verbundenen Zustand die Sockelplatte (3a) des Verbindungselements (3) zwischen dem flächigen Verbindungsabschnitt (4), der Fixierlippe (8) des Rastfingers (10) und dem Rastvorsprung (12) zumindest formschlüssig gehalten ist, sodass bei einer unterschiedlichen Wärmeausdehnung des ersten Bauteils (1) in Relation zu dem zweiten Bauteil (2) die Sockelplatte (3a) verschiebbar bleibt, indem der Rastfinger (10) mittels des Rastvorsprungs (12) erneut durch das Verbindungselement (3) auslenkbar ist.

2. System nach Anspruch 1, **dadurch gekennzeichnet, dass** der Schaft (3b) zusätzlich an einem Anschlag (13) auf wenigstens einer der Seitenränder (14, 15) des Langlochs (5) anliegt.

3. System nach Anspruch 1 oder 2, **dadurch gekennzeichnet, dass** die Dicke (x) der Sockelplatte (3a) dem Abstand (y) zwischen der Fixierlippe (8) und dem flächigen Verbindungsabschnitt (4) entspricht.

4. System nach einem der vorstehenden Ansprüche, **dadurch gekennzeichnet, dass** der Rastvorsprung (12) eine Aufgleitrampe (12a) für die Sockelplatte (3a) aufweist, die derart ausgebildet ist, dass beim Einführen des Schafts (3b) des Verbindungselements (3) in das Langloch (5) die Sockelplatte (3a) den Rastfinger (10) von dem Verbindungsabschnitt (4) weg auslenkt, sodass die Sockelplatte (3a) in den Raum zwischen der Fixierlippe (8) des Rastfingers (10) und dem Verbindungsabschnitt (4) gleiten kann.

5. System nach einem der vorstehenden Ansprüche, **dadurch gekennzeichnet, dass** das erste Bauteil (1) eine Verstärkungsstruktur für das zweite Bauteil (2) ausbildet oder umfasst.

6. System nach einem der vorstehenden Ansprüche, **dadurch gekennzeichnet, dass** das Verbindungselement (3) ferner eine mit dem Schaft (3b) verbundene Klemmplatte (3c) aufweist, wobei die Klemmplatte (3c) von der Sockelplatte (3a) in einem Abstand (z) angeordnet ist, der größer oder gleich der Dicke D des Verbindungsabschnitts (4) ist und, wobei im verbundenen Zustand die Sockelplatte (3a) und die Klemmplatte (3c) den Verbindungsabschnitt (4) bereichsweise zwischen sich einfassen.

7. System nach einem der vorstehenden Ansprüche, **dadurch gekennzeichnet, dass** das erste Bauteil (1) in einem Spritzgussverfahren oder in einem generativen Verfahren hergestellt ist.

8. System nach einem der vorstehenden Ansprüche, **dadurch gekennzeichnet, dass** die Sockelplatte (3a) eine rechteckige, runde oder ovale Geometrie aufweist.

9. System nach einem der vorstehenden Ansprüche, mit einem zweiten Bauteil (2), wobei das zweite Bauteil (2) ein Karosserieteil eines Kraftfahrzeuges oder ein Verkleidungsteil eines Kraftfahrzeuges ist.
